# EUROPEAN PATENT SPECIFICATION

(11) **EP 4 108 322 B1**
(45) Date of publication and mention of the grant of the patent: **29.01.2025**
(21) Application number: 21818037.0
(22) Date of filing: 22.02.2021
(51) Int. Cl.: B01F 23/23, B01F 23/231, B01F 23/2373, C02F 1/74, A01K 63/04, B06B 1/06

(54) **BUBBLE GENERATION DEVICE AND BUBBLE GENERATION SYSTEM**
BLASENERZEUGUNGSVORRICHTUNG UND BLASENERZEUGUNGSSYSTEM
DISPOSITIF ET SYSTÈME DE GÉNÉRATION DE BULLES

(30) Priority: 03.06.2020 JP 2020097058
(43) Date of publication of application: 28.12.2022
(73) Proprietor: Murata Manufacturing Co., Ltd., Nagaokakyo-shi, Kyoto 617-8555 (JP)
(72) Inventor: FUJIMOTO, Katsumi, Nagaokakyo-shi, Kyoto 617-8555 (JP); SHIMIZU, Mie, Nagaokakyo-shi, Kyoto 617-8555 (JP); HASHIMOTO, Junichi, Nagaokakyo-shi, Kyoto 617-8555 (JP)
(74) Representative: Zimmermann, Tankred Klaus
(86) International application number: PCT/JP2021/006590
(87) International publication number: WO 2021/245995

(56) References cited:
- WO-A1-2018/100795
- WO-A1-2018/207395
- JP-A- 2006 087 984
- JP-B1- 6 819 844
- JP-B1- 6 819 845
- US-A1- 2011 284 656

## Description

### Technical Field

The present disclosure relates to a bubble generating device and a bubble generating system using the bubble generating device.

### Background Art

In recent years, water purification, waste water treatment, and fish farming have been performed using fine bubbles, and fine bubbles have been used in various fields. Therefore, a bubble generating device that generates fine bubbles has been developed (Patent Document 1). Further, an apparatus for jetting air bubbles which is provided with an injection part, a piezoelectric/electrostrictive element, a pressure regulating means, a pressure sensor for detecting the pressure Pw of a liquid W and an electric controller is known (Patent Document 2).

The bubble generating device described in Patent Document 1 generates fine bubbles using a piezoelectric element. The bubble generating device uses vibration in a top-bottom direction in a central portion of a vibration plate that performs flexural vibration, and tears off, by vibration, bubbles generated in pores formed on the vibration plate to make fine bubbles. Therefore, one surface of the vibration plate where pores are formed is always exposed to a liquid such as water, and another surface needs to be provided with a space into which a gas is introduced for generating bubbles. According to the Patent Document 2, the injection part comprises a plate-shaped body having a gas jetting through-hole, one end of which is used as a gas jetting spout, and a wall 11b connected to the plate-shaped body so that a gas supplying space where a gas is supplied is formed by the plate-shaped body and the wall. The gas GS the pressure of which is regulated by the pressure regulating means according to the detected pressure Pw is supplied to the gas supplying space. The electric controller sends a driving signal to the piezoelectric/electrostrictive element to deform the piezoelectric/electrostrictive element and vibrate the plate-shaped body. As a result, minute air bubbles are jetted from the gas jetting through-hole. Patent Document 2 further discloses a bubble generating device that is attachable to a liquid tank and is configured to generate, by vibration, fine bubbles in a liquid in the liquid tank, the bubble generating device comprising: a vibration plate that has a plurality of pores, said vibration plate being configured to be in contact with a liquid on one surface, and being configured to be in contact with a gas on another surface; a first cylindrical body configured to hold, at one end, the vibration plate; a spring having a plate shape configured to support another end of the first cylindrical body; a second cylindrical body configured to support, at one end, a position of the spring inside a position where the first cylindrical body is supported; and a piezoelectric element.

### Citation List

### Patent Document

Patent Document 1: Japanese Unexamined Patent Application Publication No. 2016-209825
Patent Document 2: Japanese Unexamined Patent Application Publication No. 2006-087984

### Summary of Invention

### Technical Problem

In the bubble generating device described in Patent Document 1, for isolating the liquid from the gas by the vibration plate, a rubber elastic body having concentric silicone rubbers holds the vibration plate. In a case where a rubber elastic body holds a vibration plate, when the vibration plate is caused to vibrate for generating bubbles, the rubber elastic body absorbs part of the vibration of the vibration plate. On the contrary, in a case where the vibration plate is held while a hard shielding object having no elastic body isolates a liquid from a gas, when the vibration plate is caused to vibrate for generating bubbles, the vibration of the vibration plate is transmitted to a liquid tank (for example, a water tank) from the shielding object and vibrates the liquid tank. That is, the vibration is easily transmitted from a portion where the vibration plate is held and escapes to the liquid tank, as a result of which the amplitude of the vibration plate decreases.

In addition, when the vibration plate is caused to vibrate while an end of the vibration plate is held, the vibration plate is caused to vibrate in a vibration mode in which the vibration plate is bent, bubbles are generated only in the vicinity of the center of the vibration plate where the amplitude of the vibration increases.

Therefore, an object of the present disclosure is to provide a bubble generating device that efficiently generates uniform bubbles in a plane of a vibration plate and a bubble generating system using the bubble generating device. Solution to Problem

According to an aspect of the present disclosure, a bubble generating device is attachable to a liquid tank and is configured to generate, by vibration, fine bubbles in a liquid in the liquid tank. The bubble generating device includes a vibration plate that has a plurality of pores, said vibration plate being configured to be in contact with a liquid on one surface, and being configured to be in contact with a gas on another surface, a first cylindrical body configured to hold, at one end, the vibration plate, a spring having a plate shape configured to support another end of the first cylindrical body, a second cylindrical body configured to support, at one end, a position of the spring outside a position where the first cylindrical body is supported, and a piezoelectric element that is provided at another end of the second cylindrical body and configured to vibrate the second cylindrical body.

According to another aspect of the present disclosure, a bubble generating system includes the bubble generating device described above and a liquid tank.

### Advantageous Effects of Invention

According to the present disclosure, by vibrating the first cylindrical body supported by the spring having a plate shape, uniform bubbles can be efficiently generated in a plane of the vibration plate.

### Brief Description of Drawings

[Fig. 1] Fig. 1 is a schematic view of a water purification apparatus in which a bubble generating device according to the present embodiment is used.
[Fig. 2] Fig. 2 is a perspective view of the bubble generating device according to the present embodiment.
[Fig. 3] Fig. 3 is a sectional view of the bubble generating device according to the present embodiment.
[Fig. 4] Fig. 4 is a plan view of a vibration plate according to the present embodiment.
[Fig. 5] Fig. 5 is a view for explaining vibration of the vibration plate of the bubble generating device according to the present embodiment.
[Fig. 6] Fig. 6 is a diagram indicating a relation between a frequency of a driving signal applied to a piezoelectric element and impedance in a bubble generating device 1 according to the present embodiment.
[Fig. 7] Fig. 7 is a sectional view of a bubble generating device according to a first modification of the present embodiment.
[Fig. 8] Fig. 8 is a perspective view of a bubble generating device according to a second modification of the present embodiment.
[Fig. 9] Fig. 9 is a sectional view of the bubble generating device according to the second modification of the present embodiment.

### Description of Embodiments

### (Embodiment)

Hereinafter, a bubble generating device according to the present embodiment will be described in detail with reference to the drawings. Note that the same and corresponding portions in the drawings will be denoted by the same reference signs, and the descriptions thereof will not be repeated.

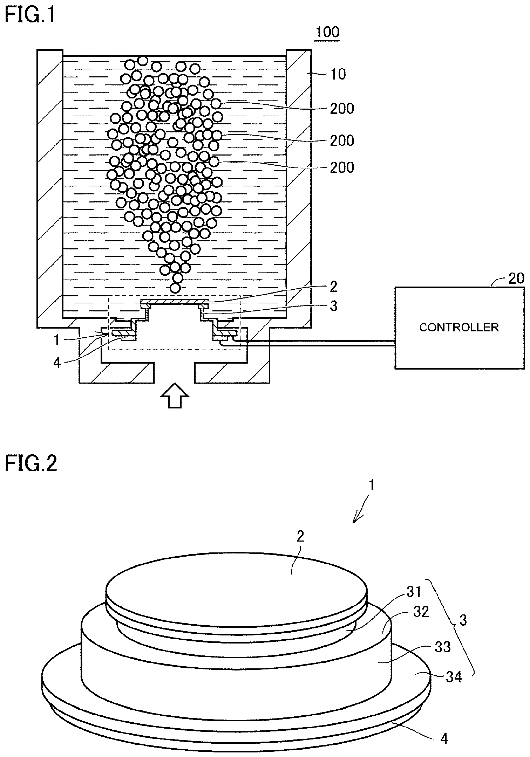

First, Fig. 1 is a schematic view of a water purification apparatus 100 in which a bubble generating device 1 according to the present embodiment is used. The water purification apparatus 100 illustrated in Fig. 1 is an example of a bubble generating system including a liquid tank 10, which is a water tank, and the bubble generating device 1. The bubble generating device 1 is, for example, provided at the bottom of the liquid tank 10 and generates fine bubbles 200 in a liquid (for example, water) in the liquid tank 10. The bubble generating system is not limited to the water purification apparatus 100 and is applicable to various systems such as a waste water treatment device, a fish farming tank, and a fuel injection device. In addition, different types of liquid is introduced into the liquid tank 10 according to the system to be applied. Water is introduced into the liquid tank 10 in the case of the water purification apparatus 100, and a liquid fuel is introduced into the liquid tank 10 in the case of a fuel injection apparatus. Moreover, the liquid tank 10 is sufficient as long as the liquid tank 10 can temporarily store a liquid, and includes a tank having a pipe into which the liquid is introduced and through which the liquid flows all the time.

The bubble generating device 1 includes a vibration plate 2, a cylindrical body 3, and a piezoelectric element 4. The bubble generating device 1 generates fine bubbles 200 from a plurality of pores (cavities) formed on the vibration plate 2 by providing the vibration plate 2 in a pore opened in a part of the bottom of the liquid tank 10 and vibrating the vibration plate 2 by the piezoelectric element 4 with the cylindrical body 3 interposed therebetween.

The vibration plate 2 is formed of, for example, a resin plate, a metal plate, a Si or silicon on insulator (SOI) substrate, a porous ceramic plate, a glass plate, or the like. When the vibration plate 2 is formed of a glass plate, for example, a glass plate transmitting ultraviolet light and deep ultraviolet light having a wavelength of 200 nm to 380 nm may be used. By forming the vibration plate 2 with a glass plate transmitting ultraviolet light and deep ultraviolet light, a light source that emits ultraviolet light from another surface side of the vibration plate 2 to the liquid in the liquid tank 10 is provided, and sterilization can be performed by ozone generation and ultraviolet irradiation.

The vibration plate 2 has a plurality of pores, is in contact with the liquid (for example, water) in the liquid tank 10 on one surface, and is in contact with a gas (for example, air) on another surface. That is, in the bubble generating device 1, by isolating a liquid from a gas by the vibration plate 2 and applying back pressure to the other surface (in the direction indicated by arrow in Fig. 1), the gas is sent to the liquid in the liquid tank 10 through the plurality of pores. The bubble generating device 1 tears off the gas sent through the plurality of pores by vibration of the vibration plate 2 so as to generate the fine bubbles 200.

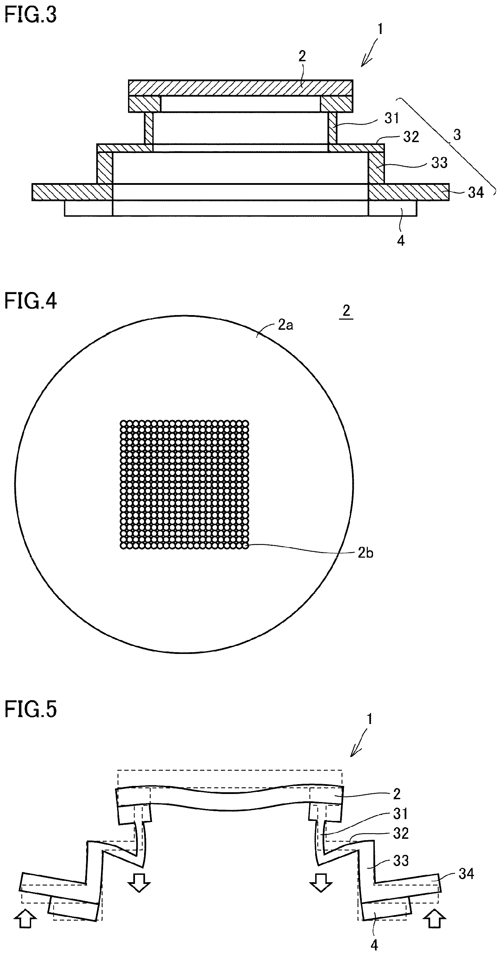

In the bubble generating device 1, the vibration plate 2 is caused to vibrate by the piezoelectric element 4 with the cylindrical body 3 interposed therebetween. Fig. 2 is a perspective view of the bubble generating device 1 according to the present embodiment. Fig. 3 is a sectional view of the bubble generating device 1 according to the present embodiment. The cylindrical body 3 illustrated in Fig. 1 includes a first cylindrical body 31, a spring 32, a second cylindrical body 33, and a flange 34 as illustrated in Fig. 3. Note that the bubble generating device 1 in Fig. 3 is a sectional view cut at the center in a penetrating direction (top-bottom direction in the figure) of the second cylindrical body 33.

An end portion of the vibration plate 2 is held at an end portion of the first cylindrical body 31 having a cylindrical shape. The first cylindrical body 31 is supported by the spring 32 on a side opposite from the vibration plate 2 side. The spring 32 is a plate-like member that is elastically deformable, supports the bottom surface of the first cylindrical body 31 having a cylindrical shape, and extends outward from the position where the spring 32 supports the first cylindrical body 31. The spring 32 has a hollow circular shape and extends so as to surround a periphery of the first cylindrical body 31 in a circular manner.

The spring 32 is supported by the second cylindrical body 33 at a position outside the position where the spring 32 supports the first cylindrical body 31. The second cylindrical body 33 has a cylindrical shape. The second cylindrical body 33 supports, at one end, the spring 32. The second cylindrical body 33 has, at another end, the flange 34 having a plate shape and extending outward. The piezoelectric element 4 having a hollow circular shape is provided on a lower surface of the flange 34. The piezoelectric element 4 vibrates in the penetrating direction (top-bottom direction in the figure) of the second cylindrical body 33. Note that the second cylindrical body 33 may be provided without the flange 34, and the piezoelectric element 4 may be provided directly at another end of the second cylindrical body 33.

The flange 34 is provided on a bottom surface side of the second cylindrical body 33 and extends outward. The flange 34 has a hollow circular shape and extends so as to surround a periphery of the second cylindrical body 33 in a circular manner. As the piezoelectric element 4 vibrates in the penetrating direction of the second cylindrical body 33, the flange 34 vibrates the second cylindrical body 33 in the penetrating direction. Note that a plurality of the piezoelectric elements 4 having a rectangular shape may be concentrically provided on the lower surface of the flange 34. Alternatively, the piezoelectric element 4 having a hollow circular shape may be provided on the upper surface of the flange 34. Alternatively, a plurality of the piezoelectric elements 4 having a rectangular shape may be concentrically provided on the upper surface of the flange 34.

The first cylindrical body 31, the spring 32, the second cylindrical body 33, and the flange 34 are integrally formed. The first cylindrical body 31, the spring 32, the second cylindrical body 33, and the flange 34 are made of, for example, metal such as stainless steel or synthetic resin. Preferably, rigid metal such as stainless steel is used. Note that the first cylindrical body 31, the spring 32, the second cylindrical body 33, and the flange 34 may be formed separately or may be formed of separate members. Any method may be adopted for a method of joining the vibration plate 2 and the first cylindrical body 31. The vibration plate 2 and the first cylindrical body 31 may be joined by an adhesive, welding, fitting, pressing, or the like.

As illustrated in Fig. 1, for example, by joining a side surface of the second cylindrical body 33 to the pore opened in a part of the bottom of the liquid tank 10, the bubble generating device 1 is coupled to the liquid tank 10. Even when the vibration plate 2 is caused to vibrate by the piezoelectric element 4 as described later, the second cylindrical body 33 is substantially unlikely to vibrate. Therefore, it is possible to substantially vibrate only the vibration plate 2 without transmitting vibration of the piezoelectric element 4 to the liquid tank 10.

The piezoelectric element 4 vibrates by, for example, being polarized in a thickness direction. The piezoelectric element 4 is made of PZT-based piezoelectric ceramics. Alternatively, other piezoelectric ceramics such as (K,Na)NbO3 may be used. In addition, piezoelectric single crystal such as LiTaO3 may be used.

In the bubble generating device 1, by employing the structure in which, for example, a glass plate is used as the vibration plate 2 that comes into contact with the liquid and the vibration plate 2 is configured to vibrate by the piezoelectric element 4 with the cylindrical body 3 interposed therebetween, the space into which the gas is introduced can be completely isolated from the liquid. By completely isolating the space into which the gas is introduced from the liquid, electric wiring and the like of the piezoelectric element 4 can be prevented from being soaked in the liquid. In addition, in the bubble generating device 1, even when a light source that emits ultraviolet light to the liquid in the liquid tank 10 is provided, since the light source can be installed in the space into which the gas is introduced, electric wiring and the like of the light source can also be prevented from being soaked in the liquid.

The plurality of pores is formed on the vibration plate 2. Fig. 4 is a plan view of the vibration plate 2 according to the present embodiment. On the vibration plate 2 illustrated in Fig. 4, a plurality of pores 2b is formed in a region of 5 mm x 5 mm provided in a central portion of a glass plate 2a having a diameter of 14 mm. On the vibration plate 2, for example, when a diameter of each pore 2b is 10 µm, and an interval between the pores 2b is 0.25 mm, 441 pores 2b can be formed in the region of 5 mm x 5 mm. Note that in Fig. 4, in order to easily imagine the plurality of pores 2b formed on the glass plate 2a, the diameter of each pore 2b and the interval between the pores 2b are made different from the actual scales.

Each pore 2b provided on the vibration plate 2 has a diameter of 0.05 µm to 20 µm on a surface on a side in contact with the liquid. By introducing the gas from the pore 2b by vibrating the vibration plate 2, the fine bubbles 200 each having a diameter of approximately 1/10 times the diameter of a bubble normally flowing can be generated in the liquid in the liquid tank 10. Since the plurality of pores 2b is formed at an interval of 10 times or more the diameter thereof, the fine bubbles 200 generated from one pore 2b is prevented from being joined with the fine bubbles 200 generated from adjacent pores 2b, and performance of generating the fine bubbles 200 that are independent from each other is improved.

As a method for forming the plurality of pores 2b on the glass plate 2a, for example, there is a method in which a laser and liquid phase etching are combined.
Specifically, in this method, by irradiating the glass plate 2a with a laser, composition of the glass plate 2a is modified by laser energy, and the modified portion is eroded by a liquid fluoride-based etching material or the like so as to form the plurality of pores 2b.

Next, vibration of the vibration plate 2 in the bubble generating device 1 will be described in detail. Fig. 5 is a view for explaining the vibration of the vibration plate 2 in the bubble generating device 1 according to the present embodiment. In the bubble generating device 1 according to the present embodiment, as the first cylindrical body 31 is substantially displaced uniformly in a top-bottom direction by the vibration of the piezoelectric element 4, the entire vibration plate 2 substantially uniformly vibrates in the top-bottom direction. On the other hand, in a bubble generating device to be compared (for example, the bubble generating device described in Japanese Unexamined Patent Application Publication No. 2016-209825), by vibration of a piezoelectric element, vibration occurs in a flexural mode in which the vibration plate is displaced most in the top-bottom direction in a central portion and is not displaced in a peripheral portion. In Fig. 5, a reference position of the bubble generating device 1 before the start of vibration is indicated by broken lines, and a position of the bubble generating device 1 after the displacement is indicated by solid lines.

With reference to Fig. 5, as the piezoelectric element 4 vibrates in the penetrating direction of the second cylindrical body 33 based on a driving signal received from a controller 20 (see Fig. 1), an outer side portion of the flange 34 is displaced upward, and then, with the second cylindrical body 33 interposed therebetween, the position of the spring 32 supporting the first cylindrical body 31 sinks downward. As the position of the spring 32 supporting the first cylindrical body 31 sinks downward, the entire first cylindrical body 31 is displaced downward, as a result of which the entire vibration plate 2 supported by the first cylindrical body 31 is displaced downward. At this time, a node (a portion that is not displaced even by the vibration of the piezoelectric element 4) is formed on a side surface of the second cylindrical body 33. Therefore, by joining the side surface of the second cylindrical body 33 to the pore opened in a part of the bottom of the liquid tank 10 illustrated in Fig. 1, the bubble generating device 1 is coupled to the liquid tank 10, and vibration is transmitted to the vibration plate 2 without substantially transmitting the vibration of the piezoelectric element 4 to the liquid tank 10.

Although not illustrated, as the piezoelectric element 4 vibrates in the penetrating direction of the second cylindrical body 33 based on a driving signal received from the controller 20 (see Fig. 1), the flange 34 is displaced downward, and then, with the second cylindrical body 33 interposed therebetween, the position of the spring 32 supporting the first cylindrical body 31 rises upward. As the position of the spring 32 supporting the first cylindrical body 31 rises upward, the entire first cylindrical body 31 is displaced upward, as a result of which the entire vibration plate 2 supported by the first cylindrical body 31 is displaced upward.

As illustrated in Fig. 5, in the bubble generating device 1 according to the present embodiment, the entire vibration plate 2 is substantially uniformly displaced in the top-bottom direction while the vibration plate 2 itself is substantially unlikely to deform by the vibration of the piezoelectric element 4. Accordingly, in the bubble generating device 1, by using top-bottom resonance of the spring 32 to drive the vibration plate 2 in a planar manner, the gas is torn off by the same displacement at any position and uniform bubbles can be generated. On the other hand, in the bubble generating device to be compared, when the vibration plate is caused to vibrate while an end of the vibration plate is held, vibration is caused in a vibration mode in which the vibration plate is bent, the gas is torn off and bubbles are generated only in the central portion of the vibration plate where the vibration amplitude increases.

In the bubble generating device to be compared, the amplitude in the central portion of the vibration plate is different from the amplitude in the peripheral portion of the vibration plate, which causes difference in tearing off the gas, and bubbles having a large diameter remain. However, in the bubble generating device 1, since the amplitude is substantially the same in the central portion and the peripheral portion of the vibration plate, bubbles having a large diameter do not remain. In addition, in the bubble generating device to be compared, in order to generate fine bubbles also in the peripheral portion of the vibration plate, large vibration needs to be applied to the vibration plate, and thus the vibration plate itself may be broken. However, in the bubble generating device 1, since fine bubbles can also be generated in the peripheral portion of the vibration plate 2 without applying large vibration to the vibration plate 2, the vibration plate 2 is not broken. Moreover, in the bubble generating device to be compared, in order to suppress a variation in the diameter of bubbles, a vibration plate provided with a pore only in the central portion of the vibration plate needs to be prepared. However, in the bubble generating device 1, since a variation in the diameter of bubbles does not have to be suppressed, many bubbles can be generated by providing pores in portions (such as the peripheral portion) other than the central portion of the vibration plate 2.

The difference in vibration between the bubble generating device 1 according to the present embodiment and the bubble generating device to be compared is based on a structural difference of the bubble generating device 1. Moreover, in the bubble generating device 1 according to the present embodiment, the vibration plate 2 can also be caused to vibrate in a mode in which the excitation frequency is increased so that the displacement in the top-bottom direction of the vibration plate 2 is maximum in the central portion of the vibration plate 2. That is, the bubble generating device 1 can perform vibration in a plurality of different vibration modes according to the excitation frequency. Here, the frequency that excites the bubble generating device 1 can be adjusted by changing the frequency of the driving signal to be applied to the piezoelectric element 4. Hereinafter, vibration that causes the vibration plate 2 to be most displaced in the top-bottom direction in the central portion of the vibration plate 2 is referred to as flexural vibration, and a vibration mode thereof is referred to as a flexural vibration mode. On the other hand, vibration that causes the entire vibration plate 2 to vibrate substantially uniformly in the top-bottom direction is referred to as spring vibration (piston vibration), and a vibration mode thereof is referred to as a spring vibration mode.

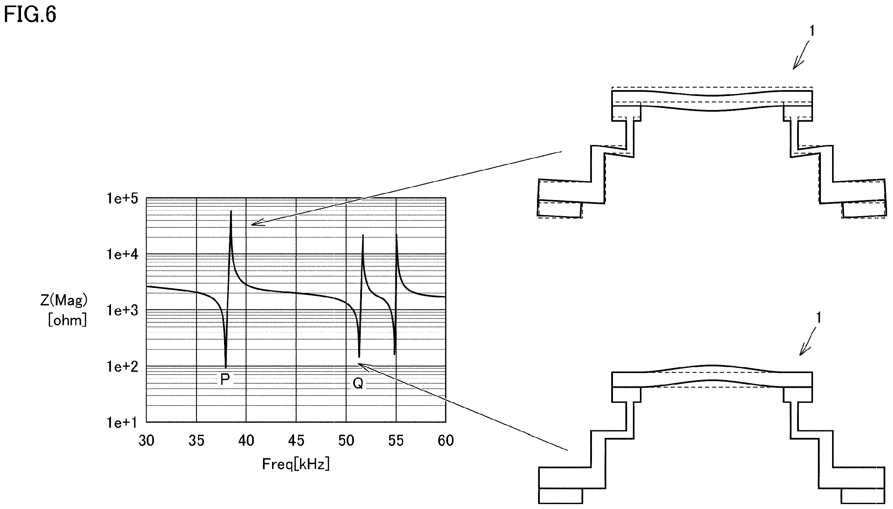

Fig. 6 is a diagram indicating a relation between a frequency of a driving signal applied to the piezoelectric element 4 and impedance in the bubble generating device 1 according to the present embodiment. As is evident from a portion indicated by a position P in Fig. 6, the impedance of the piezoelectric element 4 significantly changes at a frequency around approximately 38 kHz. The position P indicates the frequency of the driving signal when the vibration plate 2 vibrates in the spring vibration mode. At the position P, as indicated by the bubble generating device 1 illustrated in the upper right in Fig. 6, the entire vibration plate 2 substantially uniformly vibrates in the top-bottom direction. Hereinafter, the frequency of the driving signal when the vibration plate 2 vibrates in the spring vibration mode is referred to as "a resonant frequency in the spring vibration mode".

As is evident from a position Q in Fig. 6, the impedance of the piezoelectric element 4 significantly changes at a frequency around approximately 51 kHz, which is higher than the frequency at the position P. The position Q indicates the frequency of the driving signal when the vibration plate 2 vibrates in the flexural vibration mode. At the position Q, as indicated by the bubble generating device 1 illustrated in the lower right in Fig. 6, vibration occurs such that the vibration plate 2 is most displaced in the top-bottom direction in the central portion of the vibration plate 2. Hereinafter, the frequency of the driving signal when the vibration plate 2 vibrates in the flexural vibration mode is referred to as "a resonant frequency in the flexural vibration mode". Note that at a frequency around approximately 55 kHz, which is higher than the frequency at the position Q, a resonant frequency in the high-order flexural vibration mode also exists.

As indicated in Fig. 6, in the bubble generating device 1, the vibration mode changes according to the frequency of the driving signal applied to the piezoelectric element 4. While the resonant frequency in the spring vibration mode is approximately 38 kHz, the resonant frequency in the flexural vibration mode is approximately 51 kHz, which is high. If the resonant frequency in the spring vibration mode and the resonant frequency in the flexural vibration mode is approximated to each other, the bubble generating device 1 cannot vibrate the vibration plate 2 only in the spring vibration mode. Here, the relation between the resonant frequency in the spring vibration mode and the resonant frequency in the flexural vibration mode changes according to the structure of the bubble generating device 1. For example, the relation between the resonant frequency in the spring vibration mode and the resonant frequency in the flexural vibration mode changes according to the thickness of the vibration plate 2.

Therefore, in the bubble generating device 1, it is preferable that the resonant frequency in the flexural vibration mode (the resonant frequency in any vibration mode in which the vibration plate 2 is bent) is configured to be higher than the resonant frequency in the spring vibration mode (the resonant frequency of the spring). For example, the thickness of the vibration plate 2 is adjusted so that the resonant frequency in the flexural vibration mode is adjusted to be higher than the resonant frequency in the spring vibration mode.

As described above, the bubble generating device 1 according to the present embodiment is a bubble generating device that is attached to a liquid tank and generates, by vibration, the fine bubbles 200 in a liquid in the liquid tank. The bubble generating device 1 includes the vibration plate 2, the first cylindrical body 31, the spring 32, the second cylindrical body 33, and the piezoelectric element 4. The vibration plate 2 has the plurality of pores 2b, is in contact with the liquid on one surface, and is in contact with a gas on another surface. The first cylindrical body 31 holds, at one end, the vibration plate 2. The spring 32 having a plate shape supports another end of the first cylindrical body 31. The second cylindrical body 33 supports, at one end, a position of the spring 32 outside a position where the first cylindrical body 31 is supported. The piezoelectric element 4 is provided at another end of the second cylindrical body 33 and vibrates the second cylindrical body 33. Note that the bubble generating system (for example, the water purification apparatus 100) includes the liquid tank 10 and the bubble generating device 1. In addition, the bubble generating device 1 is preferably coupled to the liquid tank 10 on a side surface of the second cylindrical body 33.

As a result, the bubble generating device 1 can efficiently generate uniform bubbles in a plane of the vibration plate 2 by vibrating the first cylindrical body 31 supported by the spring 32 having a plate shape. In addition, the bubble generating device 1 can completely isolate the space into which the gas is introduced from the liquid, and thus can prevent the electric wiring and the like of the piezoelectric element 4 from being soaked in the liquid. Note that in the bubble generating system, since the bubble generating device 1 is coupled to the liquid tank 10 on a side surface of the second cylindrical body 33, the vibration can be prevented from being transmitted to the liquid tank, and the liquid tank itself is not substantially vibrated.

In addition, it is preferable that the resonant frequency in any vibration mode in which the vibration plate 2 is bent is configured to be higher than the resonant frequency of the spring 32. As a result, the bubble generating device 1 can vibrate the vibration plate 2 only in the spring vibration mode.

Moreover, the second cylindrical body 33 has the flange 34 having a plate shape and extending outward at another end. The piezoelectric element 4 is preferably provided on an upper surface or a lower surface of the flange 34. As a result, in the bubble generating device 1, the piezoelectric element 4 can be prevented from being soaked in the liquid.

### (Modifications)

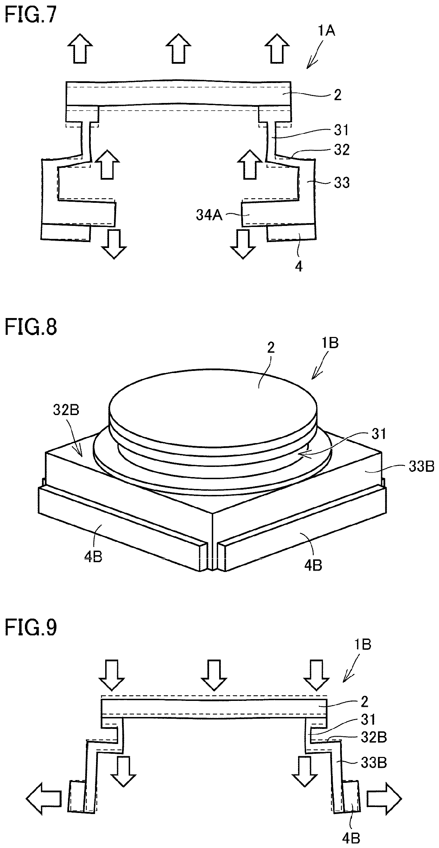

Hereinafter, modifications of the present embodiment will be described with reference to the drawings. Fig. 7 is a sectional view of a bubble generating device 1A according to a first modification of the present embodiment. In Fig. 7, a reference position of the bubble generating device 1A before start of vibration is indicated by broken lines, and a position of the bubble generating device 1A after displacement is indicated by solid lines. Note that the same configurations as the bubble generating device 1 will be denoted by the same reference signs, and the descriptions thereof will not be repeated. The bubble generating device 1A is different from the bubble generating device 1 in that a flange 34A extends toward the inside of the bubble generating device 1A.

The flange 34A is provided at another end of the second cylindrical body 33 (the second cylindrical body 33 supports the spring 32 at one end) and vibrates in the penetrating direction of the second cylindrical body 33 (top-bottom direction in the figure). The flange 34A is provided with the piezoelectric element 4 having a hollow circular shape on the lower surface. The flange 34A has a hollow circular shape, is provided on a bottom surface side of the second cylindrical body 33, and extends inward from the position where the flange 34A is provided. As the piezoelectric element 4 vibrates in the penetrating direction of the second cylindrical body 33, the flange 34A vibrates in the penetrating direction of the second cylindrical body 33.

As the piezoelectric element 4 vibrates in the penetrating direction of the second cylindrical body 33 based on a driving signal received from the controller 20 (see Fig. 1), the flange 34A is displaced downward, and then the position of the spring 32 supporting the first cylindrical body 31 rises upward. As the position of the spring 32 supporting the first cylindrical body 31 rises upward, the entire first cylindrical body 31 is displaced upward, as a result of which the entire vibration plate 2 supported by the first cylindrical body 31 is also displaced upward. At this time, the side surface of the second cylindrical body 33 is not displaced by the vibration of the piezoelectric element 4.

Although not illustrated, when the flange 34A is displaced upward, the position of the spring 32 supporting the first cylindrical body 31 sinks downward. As the position of the spring 32 supporting the first cylindrical body 31 sinks downward, the entire first cylindrical body 31 is displaced downward, as a result of which the entire vibration plate 2 supported by the first cylindrical body 31 is also displaced downward. At this time, the side surface of the second cylindrical body 33 is not displaced by the vibration of the piezoelectric element 4.

As described above, since the bubble generating device 1A can vibrate the vibration plate 2 in the spring vibration mode in the same manner as the bubble generating device 1, the bubble generating device 1A exhibits the same effects as the bubble generating device 1. Note that in the bubble generating device 1A, a plurality of piezoelectric elements 4 each having a rectangular shape may be concentrically provided on the lower surface of the flange 34A. Alternatively, the piezoelectric element 4 having a hollow circular shape may be provided on the upper surface of the flange 34A. Alternatively, the plurality of piezoelectric elements 4 each having a rectangular shape may be concentrically provided on the upper surface of the flange 34A. Alternatively, the piezoelectric element 4 may be matched to the shape of the flange 34A, and the piezoelectric element 4 and the flange 34A may be integrally formed. As the bubble generating device 1A is configured as described above, the size of the device can be reduced, and in particular, the size in the width direction can be reduced.

Next, Fig. 8 is a perspective view of a bubble generating device 1B according to a second modification of the present embodiment. The bubble generating device 1B includes the vibration plate 2, the first cylindrical body 31, a spring 32B, a second cylindrical body 33B, and a piezoelectric element 4B. Note that the same configurations as the bubble generating device 1 will be denoted by the same reference signs, and the descriptions thereof will not be repeated.

The spring 32B supports the bottom surface of the first cylindrical body 31 having a cylindrical shape and extends outward from the position where the spring 32B supports the first cylindrical body 31. The spring 32B extends so as to surround, in a rectangular shape, a periphery of the first cylindrical body 31.

The spring 32B is supported by the second cylindrical body 33B at a position outside the position where the spring 32B supports the first cylindrical body 31. The second cylindrical body 33B has a squarely cylindrical shape. On each of the four side surfaces of the second cylindrical body 33B, the piezoelectric element 4B having a rectangular shape is disposed. The piezoelectric element 4B is a vibrating body that vibrates in a direction (right-left direction or front-back direction in the figure) perpendicular to a penetrating direction (top-bottom direction in the figure) of the second cylindrical body 33B. The piezoelectric element 4B may be disposed only on two surfaces facing each other instead of being disposed on the four side surfaces of the second cylindrical body 33B.

Fig. 9 is a sectional view of the bubble generating device 1B according to the second modification of the present embodiment. In Fig. 9, a case in which the bubble generating device 1B resonates in a vibration mode (spring vibration mode) in which the first cylindrical body 31 is substantially uniformly displaced in a top-bottom direction by the vibration of the piezoelectric element 4B will be described. In Fig. 9, a reference position of the bubble generating device 1B before start of vibration is indicated by broken lines, and a position of the bubble generating device 1B after displacement is indicated by solid lines.

In the bubble generating device 1B, the piezoelectric elements 4B provided on side surfaces facing each other are caused to vibrate mutually inward or outward. In the bubble generating device 1B, as the piezoelectric elements 4B are caused to vibrate, the second cylindrical body 33B is displaced outward, and the position of the spring 32B supporting the first cylindrical body 31 sinks downward. As the position of the spring 32B sinks downward, the entire first cylindrical body 31 is displaced downward, and the entire vibration plate 2 supported by the first cylindrical body 31 is also displaced downward.

Although not illustrated, by vibrating the piezoelectric elements 4B, the second cylindrical body 33B is displaced inward, and the position of the spring 32B supporting the first cylindrical body 31 rises upward. As the position of the spring 32B rises upward, the entire first cylindrical body 31 is displaced upward, and the entire vibration plate 2 supported by the first cylindrical body 31 is also displaced upward. As a result, the entire vibration plate 2 is substantially uniformly displaced in the top-bottom direction while the vibration plate 2 itself is substantially unlikely to deform by the vibration of the piezoelectric elements 4B. As the bubble generating device 1B is configured as described above, the size of the device can be reduced in the width direction and the thickness direction, and the cost can be reduced.

The embodiment disclosed this time should be considered as illustrative in all respects and not restrictive. The scope of the present invention is defined by the terms of the claims, rather than the description above.

### Reference Signs List

1, 1A, 1B BUBBLE GENERATING DEVICE, 2 VIBRATION PLATE, 2a GLASS PLATE, 2b PORE, 3 CYLINDRICAL BODY, 31 FIRST CYLINDRICAL BODY, 32 SPRING, 33 SECOND CYLINDRICAL BODY, 34 FLANGE, 4, 4B PIEZOELECTRIC ELEMENT, 10 LIQUID TANK, 20 CONTROLLER, 100 WATER PURIFICATION APPARATUS, 200 BUBBLE

## Claims

1. A bubble generating device (1, 1A, 1B) that is attachable to a liquid tank (10) and is configured to generate, by vibration, fine bubbles in a liquid in the liquid tank (10), the bubble generating device (1, 1A, 1B) comprising:
a vibration plate (2) that has a plurality of pores, said vibration plate (2) being configured to be in contact with a liquid on one surface, and being configured to be in contact with a gas on another surface;
a first cylindrical body (31) configured to hold, at one end, the vibration plate (2) ;
a spring (32) having a plate shape configured to support another end of the first cylindrical body (31);
a second cylindrical body (33) configured to support, at one end, a position of the spring (32) outside a position where the first cylindrical body (31) is supported; and
a piezoelectric element (4) that is provided at another end of the second cylindrical body (33) and is configured to vibrate the second cylindrical body (33).

2. The bubble generating device (1, 1A, 1B) according to Claim 1, wherein
a resonant frequency in any vibration mode in which the vibration plate (2) is bent is configured to be higher than a resonant frequency of the spring (32).

3. The bubble generating device (1B) according to Claim 1 or 2, wherein
the second cylindrical body (33B) has, at the other end, a flange (34) having a plate shape and extending outward, and
the piezoelectric element (4B) is provided on an upper surface or a lower surface of the flange (34).

4. The bubble generating device (1A) according to Claim 1 or 2, wherein
the second cylindrical body (33) has, at the other end, a flange (34A) having a plate shape and extending inward, and
the piezoelectric element (4) is provided on an upper surface or a lower surface of the flange (34A).

5. The bubble generating device (1, 1A, 1B) according to Claim 1 or 2, wherein
a plurality of the piezoelectric elements (4) is disposed on side surfaces of the second cylindrical body (33) and is caused to vibrate in a direction perpendicular to a penetrating direction of the second cylindrical body (33).

6. The bubble generating device (1, 1A, 1B) according to Claim 5, wherein
the side surfaces of the second cylindrical body (33, 33B) on which the plurality of the piezoelectric elements (4, 4B) is disposed forma rectangular shape when viewed in a penetrating direction of the first cylindrical body (31) .

7. A bubble generating system (100) comprising:
the bubble generating device (1, 1A, 1B) according to any one of Claims 1 to 6; and
a liquid tank (10).

8. The bubble generating system (100) according to Claim 7, wherein
the bubble generating device (1, 1A, 1B) is coupled to the liquid tank (10) on a side surface of the second cylindrical body (33) .

## Patentansprüche

1. Blasenerzeugungsvorrichtung (1, 1A, 1B), die an einem Flüssigkeitstank (10) anbringbar ist und dazu konfiguriert ist, durch Vibration feine Blasen in einer Flüssigkeit in dem Flüssigkeitstank (10) zu erzeugen, wobei die Blasenerzeugungsvorrichtung (1, 1A, 1B) folgende Merkmale aufweist:
eine Vibrationsplatte (2), die eine Mehrzahl von Poren aufweist, wobei die Vibrationsplatte (2) dazu konfiguriert ist, mit einer Flüssigkeit auf einer Oberfläche in Kontakt zu sein, und dazu konfiguriert ist, mit einem Gas auf einer anderen Oberfläche in Kontakt zu sein;
einen ersten zylindrischen Körper (31), der dazu konfiguriert ist, an einem Ende die Vibrationsplatte (2) zu halten;
eine Feder (32) mit einer Plattenform, die dazu konfiguriert ist, ein anderes Ende des ersten zylindrischen Körpers (31) zu tragen;
einen zweiten zylindrischen Körper (33), der dazu konfiguriert ist, an einem Ende eine Position der Feder (32) außerhalb einer Position zu tragen, an der der erste zylindrische Körper (31) getragen wird; und
ein piezoelektrisches Element (4), das an einem anderen Ende des zweiten zylindrischen Körpers (33) vorgesehen ist und dazu konfiguriert ist, den zweiten zylindrischen Körper (33) in Vibration zu versetzen.

2. Blasenerzeugungsvorrichtung (1, 1A, 1B) gemäß Anspruch 1, bei der
eine Resonanzfrequenz in einem beliebigen Vibrationsmodus, in dem die Vibrationsplatte (2) gebogen ist, dazu konfiguriert ist, höher als eine Resonanzfrequenz der Feder (32) zu sein.

3. Blasenerzeugungsvorrichtung (1B) gemäß Anspruch 1 oder 2, bei der
der zweite zylindrische Körper (33B) an dem anderen Ende einen Flansch (34) aufweist, der eine Plattenform aufweist und sich nach außen erstreckt, und
das piezoelektrische Element (4B) auf einer oberen Oberfläche oder einer unteren Oberfläche des Flansches (34) vorgesehen ist.

4. Blasenerzeugungsvorrichtung (1A) gemäß Anspruch 1 oder 2, bei der
der zweite zylindrische Körper (33) an dem anderen Ende einen Flansch (34A) aufweist, der eine Plattenform aufweist und sich nach innen erstreckt, und
das piezoelektrische Element (4) auf einer oberen Oberfläche oder einer unteren Oberfläche des Flansches (34A) vorgesehen ist.

5. Blasenerzeugungsvorrichtung (1, 1A, 1B) gemäß Anspruch 1 oder 2, bei der
eine Mehrzahl der piezoelektrischen Elemente (4) auf Seitenoberflächen des zweiten zylindrischen Körpers (33) angeordnet ist und dazu gebracht wird, in einer Richtung senkrecht zu einer Durchdringungsrichtung des zweiten zylindrischen Körpers (33) zu vibrieren.

6. Blasenerzeugungsvorrichtung (1, 1A, 1B) gemäß Anspruch 5, bei der
die Seitenoberflächen des zweiten zylindrischen Körpers (33, 33B), auf denen die Mehrzahl der piezoelektrischen Elemente (4, 4B) angeordnet ist, bei Betrachtung in einer Durchdringungsrichtung des ersten zylindrischen Körpers (31) eine rechteckige Form bilden.

7. Blasenerzeugungssystem (100), das folgende Merkmale aufweist:
die Blasenerzeugungsvorrichtung (1, 1A, 1B) gemäß einem der Ansprüche 1 bis 6; und
einen Flüssigkeitstank (10).

8. Blasenerzeugungssystem (100) gemäß Anspruch 7, bei dem
die Blasenerzeugungsvorrichtung (1, 1A, 1B) mit dem Flüssigkeitstank (10) an einer Seitenfläche des zweiten zylindrischen Körpers (33) gekoppelt ist.

## Revendications

1. Dispositif de génération de bulles (1, 1A, 1B) qui peut être fixé à un réservoir de liquide (10) et est configuré pour générer, par vibration, de fines bulles dans un liquide dans le réservoir de liquide (10), le dispositif de génération de bulles (1, 1A, 1B) comprenant :
une plaque de vibration (2) qui a une pluralité de pores, ladite plaque de vibration (2) étant configurée pour être en contact avec un liquide sur une surface, et étant configurée pour être en contact avec un gaz sur une autre surface ;
un premier corps cylindrique (31) configuré pour maintenir, au niveau d'une extrémité, la plaque de vibration (2) ;
un ressort (32) ayant une forme de plaque configurée pour supporter une autre extrémité du premier corps cylindrique (31) ;
un deuxième corps cylindrique (33) configuré pour supporter, au niveau d'une extrémité, une position du ressort (32) hors d'une position dans laquelle le premier corps cylindrique (31) est supporté ; et
un élément piézoélectrique (4) qui est prévu au niveau d'une autre extrémité du deuxième corps cylindrique (33) et est configuré pour faire vibrer le deuxième corps cylindrique (33).

2. Dispositif de génération de bulles (1, 1A, 1B) selon la revendication 1, dans lequel :
une fréquence de résonance dans n'importe quel mode de vibration dans lequel la plaque de vibration (2) est pliée, est configurée pour être plus haute qu'une fréquence de résonance du ressort (32).

3. Dispositif de génération de bulles (1B) selon la revendication 1 ou 2, dans lequel :
le deuxième corps cylindrique (33B) a, au niveau de l'autre extrémité, une bride (34) ayant une forme de plaque et s'étendant vers l'extérieur, et
l'élément piézoélectrique (4B) est prévu sur une surface supérieure ou une surface inférieure de la bride (34).

4. Dispositif de génération de bulles (1A) selon la revendication 1 ou 2, dans lequel :
le deuxième corps cylindrique (33) a, au niveau de l'autre extrémité, une bride (34A) ayant une forme de plaque et s'étendant vers l'intérieur, et
l'élément piézoélectrique (4) est prévu sur une surface supérieure ou une surface inférieure de la bride (34A).

5. Dispositif de génération de bulles (1, 1A, 1B) selon la revendication 1 ou 2, dans lequel :
une pluralité d'éléments piézoélectriques (4) est disposée sur les surfaces latérales du deuxième corps cylindrique (33) et est amenée à vibrer dans une direction perpendiculaire à une direction de pénétration du deuxième corps cylindrique (33).

6. Dispositif de génération de bulles (1, 1A, 1B) selon la revendication 5, dans lequel :
les surfaces latérales du deuxième corps cylindrique (33, 33B) sur lesquelles la pluralité d'éléments piézoélectriques (4, 4B) est disposée, forment une forme rectangulaire lorsqu'elles sont observées dans une direction de pénétration du premier corps cylindrique (31).

7. Système de génération de bulles (100) comprenant :
le dispositif de génération de bulles (1, 1A, 1B) selon l'une quelconque des revendications 1 à 6 ; et
un réservoir de liquide (10).

8. Système de génération de bulles (100) selon la revendication 7, dans lequel :
le dispositif de génération de bulles (1, 1A, 1B) est couplé au réservoir de liquide (10) sur une surface latérale du deuxième corps cylindrique (33).
